(19) Europäisches Patentamt
European Patent Office
Office européen des brevets

(11) **EP 2 965 043 B1**

## (12) EUROPÄISCHE PATENTSCHRIFT

(45) Veröffentlichungstag und Bekanntmachung des Hinweises auf die Patenterteilung:
**24.10.2018 Patentblatt 2018/43**

(21) Anmeldenummer: **14712611.4**

(22) Anmeldetag: **28.02.2014**

(51) Int Cl.:
***G01D 5/22*** (2006.01)     ***G01D 5/14*** (2006.01)
***G01D 3/036*** (2006.01)

(86) Internationale Anmeldenummer:
**PCT/EP2014/053962**

(87) Internationale Veröffentlichungsnummer:
**WO 2014/135453 (12.09.2014 Gazette 2014/37)**

(54) **MAGNETISCHER LINEAR- ODER DREHGEBER**

MAGNETIC LINEAR OR ROTARY ENCODER

CODEUR LINÉAIRE OU ROTATIF MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2013 DE 102013102179**
**05.04.2013 DE 102013103445**

(43) Veröffentlichungstag der Anmeldung:
**13.01.2016 Patentblatt 2016/02**

(73) Patentinhaber: **Avago Technologies General IP (Singapore) Pte. Ltd.**
**Singapore 768923 (SG)**

(72) Erfinder:
• **Mehnert, Walter**
**85521 Ottobrunn (DE)**
• **Theil, Thomas**
**82340 Feldafing (DE)**

(74) Vertreter: **Dilg, Haeusler, Schindelmann Patentanwaltsgesellschaft mbH**
**Leonrodstraße 58**
**80636 München (DE)**

(56) Entgegenhaltungen:
**EP-A1- 2 549 236        WO-A1-98/54547**
**DE-A1-102007 039 050    FR-A- 1 537 362**

• **Talat Ozyagcilar: "Freescale Semiconductor Application Note AN4247", , 20. März 2012 (2012-03-20), Seiten 1-13, XP055119709, Gefunden im Internet: URL:http://web.archive.org/web/20120320161 517/http://cache.freescale.com/files/senso rs/doc/app_note/AN4247.pdf [gefunden am 2014-05-23]**

**Beschreibung**

Die Erfindung betrifft einen magnetischen Linear- oder Drehgeber der im Oberbegriff von Anspruch 1 niedergelegten Art. Solche Geber sind beispielsweise in den Druckschriften DE 10 2007 039 050 A1 und DE 10 2010 022 154 A1 beschrieben.

In DE 10 2009 023 515 A1 und DE 10 2010 010 560 wird im Zusammenhang mit vergleichbaren Gebern darauf hingewiesen, dass es zur Erzielung hochgenauer Messergebnisse erforderlich ist, die für die jeweilige Position kennzeichnenden Magnetfeldwerte mit Hilfe von beispielsweise vier Magnetfeldsensoren zu ermitteln, um aus den jeweils anfallenden beispielsweise vier Messwerten zwei Differenzen und aus diesen einen Quotienten bilden zu können (ratiometrisches Differenzen-Verfahren), um die Einflüsse sowohl von additiven (z.B. von sich dem Mess-Magnetfeld überlagernden Fremd-Magnetfeldern) als auch von multiplikativen Störgrößen (z.B. von temperaturbedingten Drifterscheinungen) eliminieren zu können. Die Anwendung dieses Verfahrens ist theoretisch widerspruchsfrei eine zur Erzielung hochgenauer Messergebnisse notwendige Bedingung. Eine ausführliche Darstellung dieses von der Art der verwendeten Sensoren unabhängigen Verfahrens findet sich - wenn auch für induktive Stellungsgeber - in der DE 42 24 225 A1.

In der Praxis zeigt sich jedoch, dass auch bei Verwendung des ratiometrischen Differenzen-Verfahrens die Messergebnisse aufgrund von Umwelteinflüssen schwanken, wodurch die erzielbare Genauigkeit in unerwünschter Weise begrenzt wird.

Somit liegt der Erfindung die Aufgabe zugrunde, einen magnetischen Linear- oder Drehgeber der eingangs genannten Art zu schaffen, bei dem sich die Messgenauigkeit erheblich steigern lässt.

Zur Lösung dieser Aufgabe sieht die Erfindung die im Anspruch 1 zusammengefassten Merkmale vor.

Der Erfindung liegt die Erkenntnis zugrunde, dass die Verwendung des ratiometrischen Differenzen-Verfahrens für die Erzielung hochgenauer Messergebnisse als hinreichende Bedingung zur Voraussetzung hat, dass in jeder möglichen Position und zu jedem Zeitpunkt die prozentuale Änderung des durch Umweltparameter beeinflussten Messfeldes in allen Magnetfeldsensoren der Feinauflösungs-Sensoreinheit zumindest während eines Messzyklusses gleich ist. Unter Messzyklus wird die Zeitdauer verstanden, in der der Linear- oder Drehgeber einen einzelnen Messwert bestimmter Genauigkeit und Auflösung generiert. Diese Bedingung ist erfüllt, wenn die kristalline Struktur des ferromagnetischen Kreises in einem definierten Bereich sich ändernder Umweltparameter generell homogen oder im einfachsten Fall in erster Näherung unverändert bleibt (magnetischer Widerstand des Messkreises $R_m$ = konstant). Damit ist z.B. gewährleistet, dass der Zusammenhang zwischen dem Erregermagnetfeld und den von jedem der Magnetfeldsensoren wahrgenommenen Messfeldern linear ist.

Sind a, b, c und d die Signale der entsprechenden Magnetfeldsensoren und $\gamma$, $\eta$ Faktoren einer multiplikative Störgröße und $\Delta$ eine additive Störgröße, dann gilt im Idealfall ($\eta$ = 1) für den Messwert m bei einem Vollwellen-Drehgeber wenn reine Sinus- und Kosinussignale vorliegen:

$$(1) \qquad m = \left. \frac{\gamma\left[(a+\Delta)-(b+\Delta)\right]}{\gamma\left[(c+\Delta)-(d+\Delta)\right]} \right|_{R_m\ =\ \text{konstant}}$$

Ferromagnetische Materialien ändern insbesondere mit der Temperatur ihr Gefüge und damit ihre magnetischen Eigenschaften stark. Daher sollten gemäß der Erfindung grundsätzlich alle ferromagnetischen Teile des Gebers, mit denen das Messfeld in Berührung kommt, getempert, d.h. einer Wärmebehandlung unterzogen werden, damit ihre Kristallstruktur soweit stabilisiert wird, dass sie sich bei normalen Temperaturschwankungen (d.h. in einem Temperaturbereich von ca. -50°C bis ca. +150°C) nicht verändert bzw. homogen bleibt.

Zur Erreichung des durch die Erfindung angestrebten Zieles reicht es jedoch im allgemeinen aus, zumindest die ferromagnetischen Elemente einer Wärmebehandlung zu unterziehen, die in unmittelbarer Nähe des Erregermagnetfeldes liegen, z.B. den Rückschlusskörper und den Umlenkkörper. In diesem Falle muss allerdings gleichzeitig das Erregermagnetfeld so nach außen abgeschirmt werden, dass vorhandene Restfeldstärken, durch die temperaturabhängige ferromagnetische Komponenten, wie z. B. die zur Abschirmung verwendete Haube, Schwankungen erleiden können, auf das Messergebnis keinen Einfluss mehr ausüben. In Weiterbildung der Erfindung werden deshalb der Rückschluss- und der Umlenkkörper aus einem getemperten ferromagnetischen Metall, vorzugsweise MU-Metall hergestellt.

Vorteilhaft ist eine einstückige Ausbildung von Umlenk- und Rückschlusskörper, doch ist dies nicht unbedingt erforderlich, wenn durch magnetisch getrennte Körper die magnetische Wirkung eines einstückigen Körpers erzielt wird.

Überdies wird in vorteilhafter Weise vorgesehen, dass lediglich solche elektronischen Bauteile wie ICs und Kondensatoren benutzt werden, die in ihrem Gehäuse keinerlei ferromagnetische Bestandteile enthalten. Wenn das nicht möglich ist, werden diese elektronischen Bauteile so weit vom Erregerfeld entfernt angeordnet, dass die durch Temperaturschwankungen bedingten Änderungen ihrer magnetischen Eigenschaften das Messfeld praktisch nicht mehr beeinflussen können.

Um eine negative Beeinflussung der Messgenauigkeit durch Hystereseeffekte zu vermeiden, ist es bevorzugt, dass sich der Umlenkkörper mit der Erregereinheit mitbewegt, sich also z.B. bei einem Drehgeber mit dieser dreht.

Darüber hinaus müssen von außen kommende, das Messergebnis störende Fremdfelder eliminiert werden. Zu diesem Zweck erhält der Sensor zusätzlich zu dem getemperten Rückschlusskörper einen ferromagnetischen Schirm, der aber nicht getempert werden muss. Seine Aufgabe ist es, Außenfelder soweit zu schwächen, dass in dem vom MU-Metall-Körper umfassten Innenraum das Restfeld gegen null geht oder nur senkrecht zu den Magnetfeldsensoren stehende (additive) Störfelder auftreten. Da getemperte Elemente stoßempfindlich sind, weil ihre Kristallstruktur durch Stöße wieder in den ursprünglichen Zustand zurückversetzt werden kann, dient der nicht getemperte Schirm zugleich als mechanischer Schutz.

In vielen Fällen ist es nicht möglich, eine ferromagnetische Geberwelle durch Temperung zu stabilisieren; auch diesbezüglich dient der topf- bzw. trogförmige Rückschlusskörper gemeinsam mit dem Umlenkkörper zur Abschirmung des Erregerfeldes nach au-ßen.

Somit wird durch die genannten Schritte ein magnetischer Linear- oder Drehgeber geschaffen, bei dem das ratiometrische Differenzen-Verfahren auf einwandfreier theoretischer Basis steht und zu Messergebnissen höchster Genauigkeit führt.

Die Erfindung wird im Folgenden anhand eines Ausführungsbeispiels unter Bezugnahme auf die Zeichnung beschrieben; in dieser zeigen:

Fig. 1    eine stark schematisierte Schnittansicht durch einen erfindungsgemäßen Drehgeber (Vollwellengeber), der auf das freie Ende einer Welle aufgesteckt ist;

Fig. 2    einen der Fig. 1 entsprechenden Schnitt durch eine andere Ausführungsform eines erfindungsgemäßen Vollwellengebers,

Fig. 3    in einem anderen Maßstab einen den Fig. 1 und 2 entsprechenden Schnitt durch einen erfindungsgemäßen Drehgeber, der eine zentrale durchgehende Bohrung aufweist (Hohlwellengeber), durch welche eine Welle, deren Drehbewegung überwacht werden soll, so hindurch gesteckt ist, dass ihre beiden Enden frei zugänglich sind,

Fig. 4    in einem anderen Maßstab eine Draufsicht auf die rechte Seite der Anordnung aus Fig. 3 in Richtung des Pfeils I,

Fig. 5    einen der Fig. 1 entsprechenden Schnitt durch eine weitere Ausführungsform eines erfindungsgemäßen Vollwellengebers, und

Fig. 6    eine Draufsicht auf die Feinauflösungs-Sensoreinheit des Vollwellengebers aus Fig. 5 in Richtung der Drehachse .

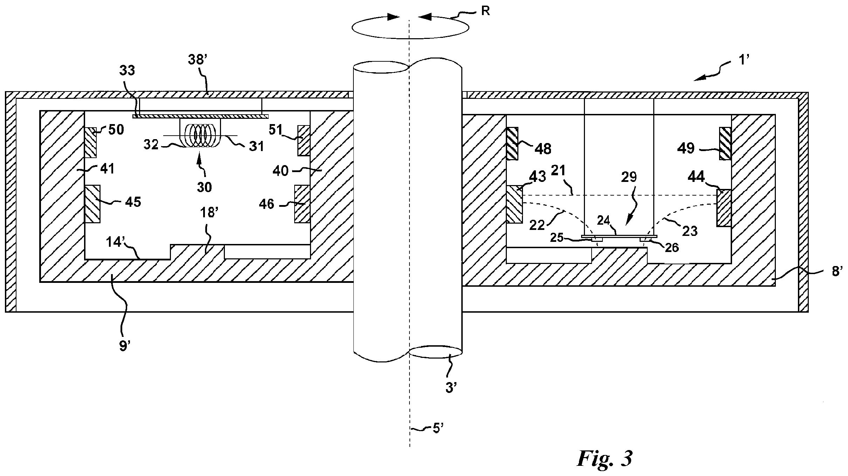

In den Figuren werden gleiche bzw. einander entsprechende Teile mit gleichen, in den Fig. 3, 5 und 6 teilweise mit' versehenen Bezugszeichen bezeichnet. Wenn im Folgenden Ausdrücke wie "oben", "unten" und dergleichen verwendet werden, so bezieht sich diese ausschließlich auf die Darstellung in der jeweiligen Figur, da die erfindungsgemäßen Linear- oder Drehgeber mit jeder beliebigen räumlichen Orientierung eingesetzt werden können. Ausdrücklich sei darauf hingewiesen, dass die Figuren zur Verdeutlichung wesentlicher Details nicht maßstabsgetreu gezeichnet sind.

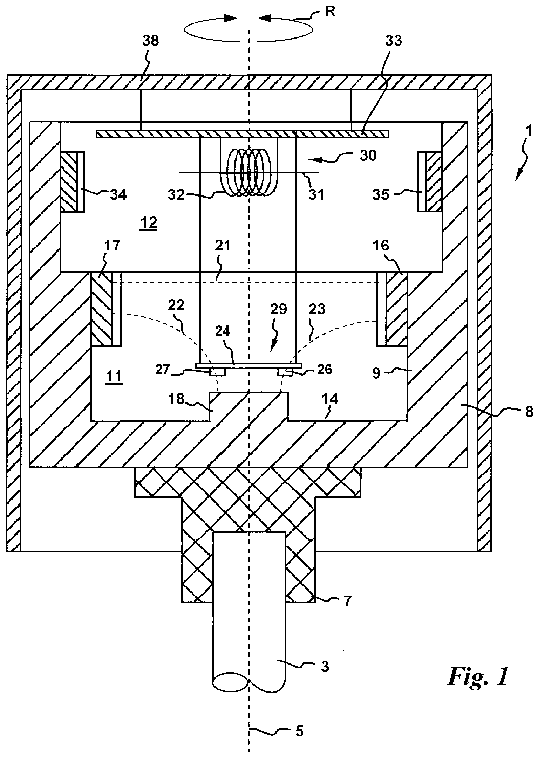

In Fig. 1 ist ein Drehgeber 1 mit einer Welle 3 dargestellt, die um ihre zentrale Längsachse 5 in beiden Richtungen rotieren kann, wie dies durch den Doppelpfeil R angedeutet ist. Bei dieser Welle 3 kann es sich um die zu überwachende Welle selbst oder um eine Geberwelle handeln, die mit der eigentlich zu überwachenden Welle mechanisch, beispielsweise durch ein Getriebe so gekoppelt ist, dass sie deren Drehbewegung eindeutig abbildet.

Auf dem in der Fig. 1 oben liegenden, freien Ende der Welle 3 ist ein rotationssymmetrischer Träger 7 aus einem nicht ferromagnetischen Material, beispielsweise Kunststoff, Aluminium, Messing oder dergleichen drehfest montiert. Er trägt auf seiner von der Welle 3 abgewandten, in der Fig. 1 oben liegenden, ebenen Stirnfläche eine drehfestfest mit ihm verbundene Erregereinheit 8, die einen kreiszylindrischen, zur Längsachse 5 rotationssymmetrischen Topf 9 aus ferromagnetischem Material umfasst.

Der Innenhohlraum des Topfes 9 weist hier zwei in axialer Richtung aneinander anschließende Abschnitte 11, 12 mit unterschiedlichen Durchmessern auf. Der Abschnitt 11 mit dem kleineren Durchmesser schließt sich unmittelbar an den senkrecht zur Längsachse 5 verlaufenden Boden 14 des Topfes 9 an, während der weiter außen liegende Abschnitt 12 mit größerem Durchmesser in die oben liegende Öffnung des Topfes 9 mündet.

Auf der Innenwand des unteren Abschnittes 11 sind zwei einander diametral gegenüberliegende primäre Permanentmagnete 16, 17 symmetrisch zur Drehachse 5 so montiert, dass sie mit jeweils einem ihrer beiden Pole an der Innenwand des Topfes 9 anliegen, während ihre freien, nach innen gerichteten Pole N und S aufeinander zuweisen. Die magnetischen Dipole der primären Permanentmagneten 16, 17 verlaufen vorzugsweise alle in der gleichen Richtung, die durch die ihre beiden sich durch ihren jeweiligen Schwerpunkt ersteckenden, in die gleiche Richtung weisenden Magnetisierungsvektoren definiert ist. Somit wird eine Zentralfeldraum gebildet, der die beiden primären Permanentmagnete 16, 17 direkt verbindet.

Durch diese Anordnung sind die beiden Permanentmagnete 16, 17, von denen sich jeder in Umfangsrichtung beispielsweise über einen Winkelbereich von 45° erstrecken kann, durch den einen Rückschlusskörper bildenden Topf 9 magnetisch miteinander verbunden.

Die beiden Magnete sind vorzugsweise gleich groß und besitzen in etwa die gleiche Magnetfeldstärke.

Das zwischen ihren Polen ausgebildete Magnetfeld wird durch einen konzentrisch zur Längsachse 5 angeordneten Umlenkkörper 18 aus ferromagnetischem Material verformt, der vom Boden 14 des Topfes 9 in Richtung der Längsachse 5 nach oben vorsteht und einen kreisförmigen Grundriss besitzt.

Die Verformung des Messmagnetfeldes hat zur Folge, dass sich nicht alle Magnetfeldlinien, die von einem der primären Permanentmagneten 16 und 17 ausgehen, mehr oder weniger geradlinig und parallel zum Boden 14 des Topfes 9 zum jeweils anderen primären Permanentmagneten 17 bzw. 16 erstrecken, wie dies für die Magnetfeldlinie 21 dargestellt ist, sondern dass einige Feldlinien zwar bei einem der beiden Pole N bzw. S beginnen aber so umgebogen werden, dass sie in den Umlenkkörper 18 münden, wie dies für die beiden Linien 22, 23 schematisch wiedergegeben ist.

Im Bereich des verformten Magnetfeldes, d.h. mit geringem axialen Abstand oberhalb der oberen Fläche des Umlenkkörpers 18 ist ein (nicht dargestellter) platinenförmiger Träger aus einem nicht ferromagnetischen Material feststehend, d.h. so montiert, dass er die Drehung der Welle 3, des Topfes 9 und der primären Permanentmagneten 16, 17 nicht mitmacht.

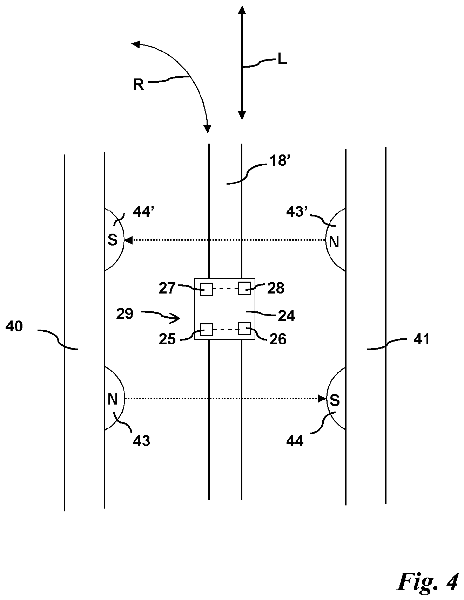

An der Unterseite des Trägers ist ein integrierter Schaltkreis (IC) 24 montiert, in dem beispielsweise vier magnetosensitive Elemente 25, 26, 27, 28 ausgebildet sind (im Schnitt der Fig. 1 sind nur die zwei magnetosensitiven Elemente 27 und 26 sichtbar), deren aktive Flächen in einer zum Boden 14 des Topfes 9 parallelen und zur Drehachse 5 senkrechten Ebene verlaufen. Wie man vor allem der Fig. 4 entnehmen kann, ist jedes der vier magnetosensitiven Elemente 25, 26, 27, 28 im Bereich einer der vier Ecken des ICs 24 so angeordnet, dass in der Draufsichtsebene ihre gegenseitigen Abstände wesentlich größer als ihre Abmessungen in dieser Ebene sind (bis zu 50 mal so groß). Zusätzlich zu den vier magnetosensitiven Elemente 25, 26, 27, 28 kann der IC 24 die gesamte zur Auswertung ihrer Ausgangssignale und zur Ermittelung des Feinpositionswertes aus diesen erforderlichen elektronischen Schaltungen oder doch zumindest Teile hiervon enthalten.

Die aktiven Flächen der vier magnetosensitive Elemente 25, 26, 27, 28 werden von den Magnetfeldlinien 22, 23 mit einer zu ihnen senkrechten, d.h. zur Längsachse 5 parallelen Komponente durchsetzt, so dass an ihren Ausgängen elektrische Signale b, c, d, a abgegriffen werden können, deren Amplituden sich bei einer Drehung der Welle 3 und damit der Erregereinheit 8 ändern, so dass aus ihnen die jeweilige momentane Winkelstellung der Welle 3 ermittelt werden kann.

Der IC 24 bildet zusammen mit den in ihm ausgebildeten magnetosensitiven Elementen 25, 26, 27, 28, bei denen es sich beispielsweise um Hallsonden handeln kann, eine Feinauflösungs-Sensoreinheit 29, die es erlaubt, die momentane Winkelposition der Welle 3 im jeweiligen Messwinkel-Intervall mit hoher Genauigkeit zu ermitteln.

Bei dem in Fig. 1 gezeigten Vollwellensensor werden die vier quadratisch angeordneten Hallelemente jeweils diagonal (überkreuz) in zwei Gruppen verschaltet, wobei nach der nicht vorveröffentlichten DE 10 2012 002 204 die gegenseitigen Abstände der Hallelemente groß gegenüber ihrem Durchmesser sind.

Dadurch, dass sich der Umlenkkörper 18 mit dem von der Erregereinheit 8 erzeugten Messmagnetfeld mitdreht, werden das Messergebnis verfälschende Hystereseeffekte vollständig eliminiert.

Sind auf der Innenseite des Topfes 9 im unteren Abschnitt 11 optimal nur zwei primäre Permanentmagnete 16, 17 angeordnet, so ergeben sich zwei Messintervalle, bei deren Durchlaufen an den Ausgängen der verschalteten magnetosensitiven Elemente 28, 27 ein sinusförmiges Signal und 26, 25 ein kosinusförmiges Signal. abgegriffen werden können, die sich jeweils über einen elektrischen Winkel von 180° erstrecken, so dass einem geometrischen Rotationswinkel der Welle 3 von 360° auch ein Paar von periodisches Signalen mit einer Phase von jeweils 360° entspricht.

Um bei Drehungen von mehr als 360° eine eindeutige Winkelstellung zu ermitteln, ist es erforderlich, die durchlaufenen Messintervalle zu zählen. Dies gilt auch dann, wenn mehr als zwei Paare von einander diametral gegenüberliegenden primären Permanentmagneten vorgesehen sind, so dass jeweils bei einer Drehung der Welle 3 über 360° mehr als zwei Messintervalle überstrichen werden.

Zu diesem Zweck ist in dem weiter außen liegenden Abschnitt 12 der Bohrung des Topfes 9 eine Zähleinheit 30 angeordnet, die einen sich in etwa parallel zum Boden 14 des Topfes 9 erstreckenden Wiegand-Draht 31 und eine diesen Draht umgebenden Spule 32 umfasst, die beide an einem feststehenden, d.h. die Drehung der Erregereinheit 8 nicht mitmachenden Träger 33 montiert sind, an dem auch der IC 24 befestigt ist.

An der Innenwand des Abschnittes 12 mit größerem Durchmesser sind zwei weitere, Permanentmagnete 34, 35 in der gleichen Weise montiert, wie dies zuvor für die beiden primären Permanentmagnete 16, 17 beschrieben wurde;

sie können zwar die gleiche Dicke und Stärke wie die primären Permanentmagnete 16, 17 besitzen, doch weisen ihre aufeinander zu weisenden Pole N, S einen größeren Abstand als die Pole N, S der primären Permanentmagnete 16, 17 auf, weil die Arbeitsfeldstärke des Wieganddrahtes 31 kleiner als die der Hallsonden ist.

Anstelle eines abgesetzten Topfes mit gleich dicken Magneten 16, 17 und 34, 35 kann auch ein durchgehender Topf mit Magneten verschiedener Dicke oder verschiedenen magnetischen Eigenschaften verwendet werden

Prinzipiell könnten die beiden weiteren Permanentmagnete 34, 35 auch weggelassen und die Zähleinheit 30 im oberen Streufeldbereich der beiden primären Permanentmagnete 16, 17 angeordnet werden. Eine solche Positionierung ist aber vergleichsweise kritisch, weil die Zähleinheit 30 für ein einwandfreies Arbeiten Felder benötigt, deren Feldstärke eng definiert ist. Der axiale Abstand des Wiegand-Drahtes 31 vom Zentralbereich des Magnetfeldes der primären Permanentmagnete 16, 17 müsste deshalb relativ genau festgelegt und eingehalten werden, was in vielen Anwendungsfällen aber möglich ist.

Daher ist die dargestellte Variante vorzuziehen, weil sie es erlaubt, den Wiegand-Draht 31 mit ausreichend großem Abstand vom Feld der primären Permanentmagnete 16, 17 anzuordnen und seine Arbeits-Feldstärke durch eine entsprechende Auslegung der weiteren Permanentmagnete 34, 35 optimal und unabhängig von der die magnetosensitiven Elemente 25, 26, 27, 28 durchsetzenden Feldstärke zu gestalten. Die Störungen, die der Wiegand-Draht beim Schalten auf das Messfeld ausüben kann, werden durch den Rückschlussköper 9 sowie durch einen möglichst großen Abstand des Wiegand-Drahtes vom Mess-Magnetfeld minimiert.

Immer dann, wenn der die weiteren Permanentmagnete 34, 35 verbindende Durchmesser eine bestimmte Winkelstellung bezüglich des Wiegand-Drahtes 31 durchläuft, wird in diesem in bekannter Weise eine Ummagnetisierung bewirkt, die zur Erzeugung eines Spannungsimpulses an den Ausgängen der Spule 32 führt, der sowohl als Zählimpuls für die Zählung der durchlaufenen Messintervalle als auch als Stromversorgungsimpuls für die (nicht dargestellte) Verarbeitungselektronik dient, die ebenfalls auf dem Träger 33 montiert sein kann, wenn sie keine ferromagnetischen Bestandteile enthält.. Zur Drehrichtungserkennung kann in an sich bekannter Weise ein hier nicht dargestelltes zusätzliches keine ferromagnetischen Bestandteile enthaltendes Sensorelement vorgesehen sein, das auf das oder die Magnetfelder der Erregereinheit 8 einmal je Messintervall anspricht.

Sowohl hinsichtlich seiner bisher beschriebenen geometrischen Ausgestaltung als auch seiner Funktion als Multiturn, der sowohl jedes der einzelnen Messintervalle mit hoher Genauigkeit auflösen als auch die die Anzahl der durchlaufenen Messintervalle unter Berücksichtigung der Drehrichtung abzählen kann, entspricht ein erfindungsgemäßer Drehgeber im Wesentlichen einer Kombination der Geber, die in den Druckschriften DE 10 2007 039 050 A1 und DE 10 2010 022 154 A1 beschrieben sind. Insbesondere in letzterer wird ein ferromagnetischer Umlenkkörper beschrieben, der sich mit der Welle und somit auch mit der Erregereinheit mitdreht.

Ein wesentlicher Unterschied des im vorliegenden Beispiel gezeigten Drehgebers gegenüber diesem Stand der Technik besteht darin, dass der ferromagnetische Rückschlusskörper der Erregereinheit 8 einen bodenseitig geschlossenen Topf 9 bildet und der Umlenkkörper 18 nicht von der zu überwachenden Welle bzw. der Geberwelle 3 gebildet wird. Er kann entweder, wie in Fig. 1 gezeigt, als integraler Bestandteil des Topfes 9 über dessen Boden 14 nach oben vorstehender, kreisringförmiger Zapfen ausgebildet sein oder von einem gesonderten, mit einem axialen Abstand oberhalb des Bodens 14 angeordneten sich mit dem Topf mitdrehenden , zylindrischen Bauteil gebildet sein. Im letzteren Fall kann durch den zusätzlichen magnetischen Widerstand des zwischen Umlenkkörper und Boden des Topfes gebildeten "Luftspaltes" erreicht werden, dass zumindest ein Teil der Magnetfeldlinien von einem der beiden Permanentmagneten durch den Umlenkkörper hindurch direkt zum anderen Permanentmagneten verläuft. Die für einen senkrechten Durchsatz der Magnetfeldsensoren erforderliche Verformung der Magnetfeldlinien bleibt dabei erhalten.

Den flachen Boden des Topfes 9 unmittelbar zur Umlenkung der Magnetfeldlinien zu verwenden, wäre ungünstig, weil hierdurch das Messfeld zu schwach ausgebildet wird.

Durch den geschlossenen Boden des Topfes 9 wird eine weitgehende Abschirmung des Mess-Magnetfeldes zur Welle 3 hin erreicht, sodass deren magnetischen Änderungen keine Rückwirkungen auf das Mess-Magnetfeld haben können. Außerdem werden durch die Welle von außen eingekoppelte Fremdmagnetfelder in ausreichendem Maße geschwächt bzw. symmetrisiert.

Weiterhin ist gemäß der Erfindung vorgesehen, dass der Topf 9 und der Umlenkkörper 18 getempert sind, sodass bei Temperaturschwankungen keine Veränderungen ihres kristallinen Gefüges auftreten und das im Messfeldraum vorhandene Magnetfeld ungleichmäßig verzerren können.

Ganz wesentlich ist die Bedingung, dass das Gehäuse der Feinauflösungs-Sensoreinheit 29 keine ferromagnetischen Bestandteile enthält, weil dieses zwangsläufig in der Nähe der Erregermagnete angeordnet ist. Der z.B. bei Temperaturveränderungen auftretende, fehlerhafte Einfluss eines solchen ferromagnetischen Gehäuses auf das Messergebnis ist exorbitant.

Ein feststehend angeordneter, z.B. als Haube ausgebildeter Schirm 38 aus Weicheisen umschließt den Topf 9 weitgehend und schützt einerseits seine offene Oberseite gegen das Eindingen von magnetischen Fremdfeldern und andererseits den gesamten Topf 9 gegen Stöße, die sein kristallines Gefüge wieder in den ursprünglichen, nicht getemperten Zustand zurückversetzen könnten. Die axiale Länge, mit der der Schirm 38 den Topf 9 umgreift, kann innerhalb der Grenzen variieren, die durch die Notwendigkeit vorgegeben sind, diese beiden Schutzfunktionen zu erfüllen.

Darüber hinaus kann der Schirm 38 zur Halterung des Trägers 33 für die Zähleinheit 30 und damit auch der Feinauflösungs-Sensoreinheit 29 dienen. Wesentlich ist, dass sich in dem vom Topf 9 umschlossenen Innenraum keine ferromagnetischen Körper befinden, deren Kristallstrukturen sich mit der Temperatur ändern. Daher sind sowohl die primären als auch die weiteren Permanentmagnete 16, 17 bzw. 34, 35 vorzugsweise getempert.

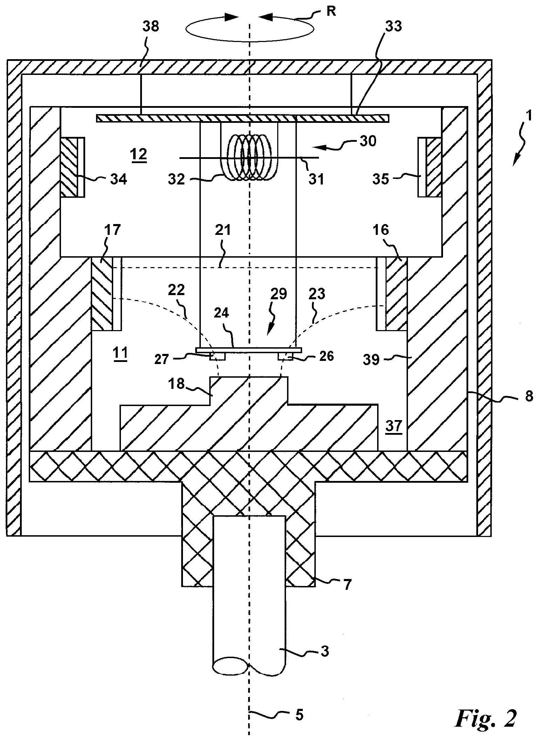

Der in Fig. 2 gezeigte Vollwellengeber 1 ist mit dem aus Fig. 1 nahezu identisch, sodass es genügt, im Folgenden nur die geringfügigen Unterschiede zwischen den beiden Varianten zu beschreiben, die im Wesentlichen darin bestehen, dass der Rückschlusskörper nicht mehr von einem Topf mit geschlossenem Boden sondern einem Ring 39 aus einem getemperten, ferromagnetischen Material gebildet wird, der mit dem Umlenkkörper 18 nicht mehr einstückig verbunden sondern von diesem durch einen kreisringförmigen Luftspalt 37 getrennt ist. Der Träger 7 aus nicht ferromagnetischem Material besitzt im Vergleich zur Fig. 1 einen größeren Durchmesser und ist sowohl mit dem Ring 39 als auch mit dem Umlenkkörper 18 drehfest verbunden. Da der Luftspalt 37 in der Praxis wesentlich kleiner gehalten werden kann, als in Fig. 2 gezeigt, ist auch bei dieser Ausführungsform gewährleistet, dass das Mess-Magnetfeld gegen magnetische Änderungen der Welle in ausreichendem Maße geschützt ist.

Bei dem in Fig. 3 gezeigten Ausführungsbeispiel handelt es sich um einen Drehgeber 1', der als so genannter "Hohlwellengeber" bei Wellen 3' zum Einsatz kommt, deren beide Enden zum Anschluss an andere Bauteile frei bleiben müssen.

Hier ist der ferromagnetische Rückschlusskörper als kreisringförmiger Trog 9' mit U-förmigem Querschnitt ausgebildet, dessen rechtwinkelig vom Boden 14' nach oben ragenden Seitenwände 40, 41 die Welle 3' konzentrisch umschließen, mit der die innere Seitenwand 40 des Troges 9' drehfest verbunden ist.

Der Umlenkkörper 18' aus ferromagnetischem Material ist auch hier mit dem Boden 14' des Troges 9' einstückig verbunden und ragt von diesem nach oben so ab, dass seine oben liegende, ebene Fläche einen zur Welle 3' konzentrischen, kreisringförmigen Grundriss besitzt und zu beiden Seitenwänden 40, 41 z.B. gleiche Abstände aufweist. Analog zu der im Zusammenhang mit Fig. 1 geschilderten Alternative kann auch hier der Umlenkkörper als eigenständiges, vom Rückschlusskörper getrenntes, sich mit diesem mitdrehendes Bauteil aus ferromagnetischem Material ausgeführt sein.

In den oben offenen Trog 9' ist analog zu den Fig. 1 und 2 eine Feinauflösungs-Sensoreinheit 29 feststehend eingehängt, deren Aufbau und Funktionsweise mit Aufbau und Funktion der entsprechenden Einheit in Fig. 1 identisch sind und daher nicht nochmals beschrieben werden. Gleiches gilt auch für die Zähleinheit 30, die hier allerdings in bevorzugter Weise auf der der Feinauflösungs-Sensoreinheit 29 bezüglich der Welle 3' diametral gegenüberliegenden Seite in den Trog 9' feststehend eingehängt ist, um die Rückwirkungen des schaltenden Wiegand-Drahtes 31 auf die Feinauflösungs-Sensoreinheit 29 weitestgehend zu minimieren.

Bei der Feinauflösungs-Sensoreinheit 29 ist hier allerdings darauf zu achten, dass die jeweils aus zwei Sensorelementen bestehenden Gruppen senkrecht zur Bewegungsrichtung parallel zueinander verlaufen (siehe auch DE 10 2009 034 744 A1) und auch jeweils in dieser Richtung verschaltet sind.

Auch hier ist es erforderlich, dass das Gehäuse der Sensorelemente keine ferromagnetischen Bestandteile umfasst. Statt ein Gehäuse zu verwenden, kann der Sensorchip auch direkt auf eine Platine gebonded werden. In diesem Falle ist aber mit mechanischem Stress zu rechnen, der das Messsystem wieder temperaturabhängig macht. Diese Betrachtungen gelten natürlich auch für das Ausführungsbeispiel gemäß Fig. 1.

Die Erregereinheit 8' umfasst hier mehrere, d.h. zwei oder mehr an den Innenseiten der Seitenwände angeordnete Paare von einander gegenüberliegenden, mit ihren jeweils gegensinnigen Polen einander zugewandten primären Permanentmagneten, von denen in Fig. 3 nur die beiden Paare 43, 44 und 45, 46 sichtbar sind. Diese Paare von primären Permanentmagneten weisen in Umfangsrichtung gleiche Winkelabstände auf und besitzen alternierende Polungen, so dass auf jeder der Seitenwände 40, 41 in Umfangsrichtung gesehen auf einen mit seinem Nordpol in das Innere des Troges 9' weisenden primären Permanentmagneten ein nächster folgt, dessen Südpol dem Troginneren zugewendet ist usw.

Entsprechendes gilt für die weiteren Permanentmagnete 48, 49, 50, 51, die zur Abzählung der Messintervalle dienen, die von den primären Permanentmagnetpaaren 43, 44 und 45,46 usw. vorgegeben werden. Anders als bei dem in Fig. 1 gezeigten Ausführungsbeispiel ist hier der Innenraum des Troges 9' nicht abgesetzt, sodass die Innenflächen seiner Seitenwände 40, 41 überall voneinander den gleichen Abstand aufweisen. Die im oberen Bereich angeordneten weiteren Permanentmagnetpaare 48, 49 und 50, 51 sind dünner und schwächer als die näher beim Boden 14' angeordneten primären Permanentmagnetpaare 43, 44 und 45, 46.

Auch hier ist ein Schirm 38' aus Weicheisen vorgesehen, der den getemperten Trog 9' zumindest so weit umschließt, dass er gegen mechanische Stöße geschützt ist und keine störenden Fremdfelder in das Innere des Troges 9' eindringen können.

In der Draufsicht der Fig. 4, in welcher der Pfeil R die Bewegungsrichtung eines Hohlwellen-Drehgebers und der Pfeil L Bewegungsrichtung eines Lineargebers andeutet, sind der Deutlichkeit halber die weiteren Permanentmagnete 48 und 49 weggelassen. Dafür sind die in Fig. 3 nicht wiedergegebenen primären Permanentmagnete 43', 44' die, in Richtung der Pfeile R bzw. L gesehen "hinter" den primären Permanentmagneten 43, 44 angeordnet und zu diesen entgegengesetzt gepolt sind. Der IC 24 ist überproportional groß dargestellt, um zu verdeutlichen, dass die in ihm auf seiner Unterseite ausgebildeten vier magnetosensitiven Elemente 25, 26, 27, 28, bei denen es sich vorzugsweise um Hallsonden handelt, mit großen gegenseitigen Abständen in seinen vier Eckbereichen angeordnet sind. Die vier magnetosensitiven Elemente sind schaltungstechnisch zu Paaren 28, 27 und 26, 25 so zusammengefasst, dass die Differenzen ihrer Ausgangssignale a-d und. c-b gebildet werden.

Wie man sieht, verlaufen die Verbindungslinien eines jeden Paares radial bzw. senkrecht zur Bewegungsrichtung R. Mit anderen Worten: Die jeweils aus zwei Sensorelementen bestehenden Gruppen 28, 27 und 26, 25 liefern hier jeweils ein in etwa sinusförmiges Signal. Die Phasenverschiebung dieser beiden Signale kann beliebig sein und ist hier gemäß Fig. 4 in etwa 45°.

Die Bedingung, mit deren Hilfe für Hohlwellen-Drehgeber und Lineargeber m ermittelt werden kann (siehe DE 10 2010 010 560) lautet:

$$\left. \frac{\gamma\big[(a(x)+\Delta)-(d(x)+\Delta)\big]}{\gamma\big[(c(x)+\Delta)-(b(x)+\Delta)\big]} \right|_{R_m(x)\,=\,\text{konst.}} = \left. \frac{a(m)-d(m)}{c(m)-b(m)} \right|_{R_m(m)\,=\,\text{konst.}}$$

mit dem Ergebnis x = m für $R_m(x) = \eta\,R_m(m)$

wobei a das Signal des magnetosensitiven Elementes 28, b das Signal des magnetosensitiven Elementes 25, c das Signal des magnetosensitiven Elementes 26, d das Signal des magnetosensitiven Elementes 27 und $R_m(x)$, $R_m(m)$ den magnetischen Widerstand des Messkreises bedeuten. x beschreibt den Mess-Augenblickswert und m den jeweiligen Sollwert. Während beim Vollwellen-Drehgeber der Messwert m direkt aus der Formel (1) ermittelt werden kann, stellen die Signale a, b, c, d beim Hohlwellen-Drehgeber und Lineargeber nur Adressen dar, unter denen die Mess-Sollwerte m in einem Speicher abgelegt sind.

Aus dem in Verbindung mit den Figuren 3 und 4 geschilderten Ausführungsbeispiel lässt sich auf einfache Weise der Aufbau eine erfindungsgemäßen Lineargebers ableiten. Denkt man sich man den Trog 9' längs eines von der zentralen Längsachse 5 ausgehenden Radius aufgeschnitten und gerade gebogen (Krümmungsradius unendlich), so erhält man eine Anordnung, die als Lineargeber verwendet werden kann. Es ist klar dass die Länge eines solchen "gerade gebogenen" Troges beliebig gewählt und mit einer Anzahl von primären Permanentmagnet-Paaren ausgerüstet werden kann, die an den jeweiligen Anwendungsfall frei anpassbar ist

Analog zu dem in Fig. 2 gezeigten Vollwellengeber ist es auch bei einem Hohlwellengeber möglich, die Rückschlusskörperanordnung, die dann von zwei konzentrischen Ringen aus einem getemperten, ferromagnetischen Material gebildet wird, und den von einem kreisringförmigen Steg gebildeten, ebenfalls getemperten und ferromagnetischen Umlenkkörper als nicht einstückig miteinander verbundene Bauteile auszubilden. Es muss lediglich auch in diesem Fall sichergestellt werden, dass diese getrennten Bauteile die gleiche magnetische Wirkung erzielen wie die einstückig miteinander verbundenen Körper 8' und 18'.

Letzteres gilt auch für einen Lineargeber, bei dem die Rückschlusskörperanordnung von zwei zueinander parallelen Platten gebildet werden kann, zwischen denen der Umlenkkörper als geradliniger Steg verläuft.

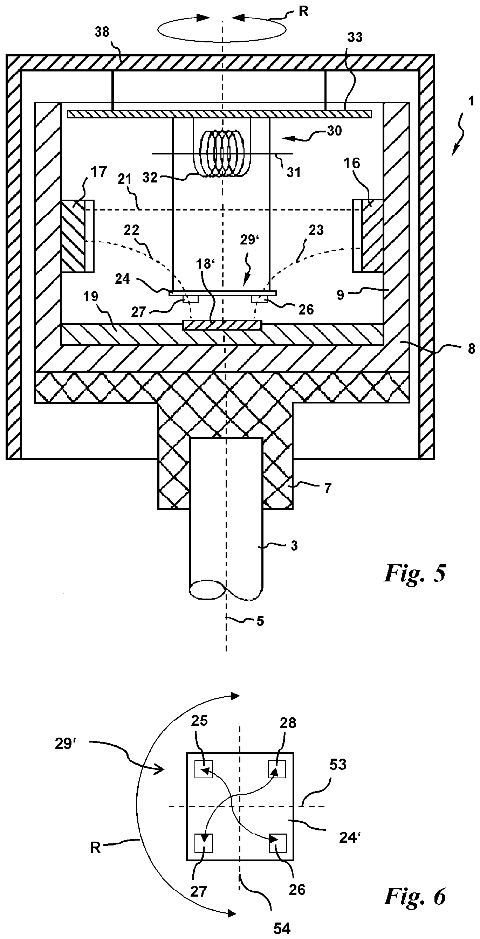

Bei dem in den Fig. 5 und 6 gezeigten Ausführungsbeispiel handelt es sich wieder um einen Vollwellen-Drehgeber 1, bei dem der Rückschlusskörper 9 der Erregereinheit 8 einen bodenseitig geschlossenen Topf bildet, wie dies auch bei dem Ausführungsbeispiel der Fig. 1 der Fall ist. Allerdings ist hier der Umlenkkörper 18' dadurch magnetisch vom Rückschlusskörper getrennt, dass er in einen nicht ferromagnetischen Körper 19 (z.B. aus Kunststoff, Aluminium, Messing und dergl.) eingebettet ist, die ihn drehfest mit der Erregereinheit verbindet.

Wie bei den anderen Ausführungsbeispielen lenkt der Umlenkkörper 18' den in seiner Nähe verlaufenden Teil des Magnetfeldes zwischen den Permanentmagneten 16, 17, der durch die Magnetfeldlinien 22, 23 symbolisiert ist, so um, dass die vier magnetosensitiven Elemente 25, 26, 27 und 28 (von denen im Schnitt der Fig. 5 nur die Elemente 27 und 26 sichtbar sind) mit einer zur Längsachse 5 parallelen Komponente der Magnetfeldlinien 22, 23 durchsetzt werden. Auch hier sind die magnetosensitiven Elemente 25, 26, 27 und 28 in einem IC 24 ausgebildet, der so angeordnet ist, dass ihre aktiven Flächen dem Umlenkkörper 18' zugewandt sind und sich in einem geringen Abstand von diesem befinden.

Ferner sind bei diesem Ausführungsbeispiel die weiteren Permanentmagnete 34, 35 des Vollwellengebers aus Fig. 1 weggelassen, und die Zähleinheit 30 ist im oberen Streufeldbereich der beiden primären Permanentmagnete 16, 17 angeordnet.

Die vier magnetosensitiven Elemente 25 und 26 bzw. 27 und 28 der Feinauflösungs-Sensoreinheit 29' sind gemäß Fig. 6 durch eine kreuzweise Verschaltung zu zwei Gruppen zusammengefasst, wie dies durch die beiden gekrümmten Doppelpfeillinien angedeutet ist. Die Verbindungen der beiden Gruppen erstrecken sich wiederum senkrecht zur Bewegungsrichtung der in der Fig. 6 nicht gezeigten Erregereinheit 8, deren Rotationsachse den die Mitte der Anordnung bildenden Schnittpunkt der beiden gestrichelten, zueinander senkrechten Linien 53, 54 senkrecht zur Zeichenebene durchstößt, wobei der Doppelpfeil R die Drehrichtung des Gebers 1 symbolisiert.

## Patentansprüche

1. Magnetischer Linear- oder Drehgeber (1, 1') zur Überwachung des Bewegungsbereichs eines bewegbaren Körpers, wobei der Linear- oder Drehgeber (1, 1') folgendes umfasst,

   - eine die zu überwachende Bewegung abbildende Erregereinheit (8, 8') mit wenigstens zwei einander diametral gegenüberliegend angeordneten primären Permanentmagneten (16, 17; 43, 44, 45, 46), die mit jeweils einem ihrer Pole an einem ferromagnetischen Rückschlusskörper (9, 9') angeordnet und über diesen magnetisch miteinander verbunden sind, und die zwischen ihren freien, nach innen gerichteten, ungleichnamigen Polen einen sie verbindenden Messfeldraum bilden,
   - eine zur Bestimmung eines Feinpositionswertes dienende, feststehend angeordnete Feinauflösungs-Sensoreinheit (29), und
   - eine die Signale der Feinauflösungs-Sensoreinheit (29) auswertende Verarbeitungselektronik mit Datenspeicher,
   **dadurch gekennzeichnet,**
   - **dass** ein sich mit der Erregereinheit (8, 8') mitbewegender, ferromagnetischer Umlenkkörper (18, 18') vorgesehen ist, der zumindest einen Teil der Magnetfeldlinien des von den primären Permanentmagneten (16, 17; 43, 44, 45, 46) erzeugten Magnetfeldes in einer zum Magnetisierungsvektor der primären Permanentmagnete (16, 17; 43, 44, 45, 46) senkrechten Richtung umlenkt,
   - **dass** die Feinauflösungs-Sensoreinheit (29) mehr als zwei Magnetfeldsensoren (25, 26, 27, 28) umfasst, die so angeordnet sind, dass sie von den vom Umlenkkörper (18, 18') umgelenkten Magnetfeldlinien mit einer senkrechten Komponente durchsetzt werden,
   - **dass** zumindest der Rückschlusskörper (9, 9') aus einem thermisch behandelten, ferromagnetischen Material besteht und
   - **dass** die Feinauflösungs-Sensoreinheit (29) keine ferromagnetischen Bestandteile enthält.

2. Linear- oder Drehgeber (1, 1') nach Anspruch 1, **dadurch gekennzeichnet, dass** auch der Umlenkkörper (18, 18') aus einem thermisch behandelten, ferromagnetischen Material besteht.

3. Linear- oder Drehgeber (1, 1') nach einem der Ansprüche 1 oder 2, **dadurch gekennzeichnet, dass** die Feinauflösungs-Sensoreinheit (29) als IC (24) mit mindestens drei Hallsonden ausgebildet ist.

4. Linear- oder Drehgeber (1, 1') nach einem der vorhergehenden Ansprüche, bei dem der zu überwachende Bewegungsbereich in zwei oder mehr Messsegmente unterteilt ist und der eine Zähl-Sensoreinheit (30) zum Abzählen der durchlaufenen Messsegmente umfasst, **dadurch gekennzeichnet, dass** die Zähl-Sensoreinheit (30) feststehend so angeordnet ist, dass sie vom Zentralfeld von weiteren Permanentmagneten (34, 35; 48, 49, 50, 51), durchsetzt werden kann und auf dieses anspricht.

5. Linear- oder Drehgeber (1, 1') nach einem der Ansprüche 2 bis 4, **dadurch gekennzeichnet, dass** Rückschluss- und Umlenkkörper (18, 18') zu einer Einheit zusammengefasst sind.

6. Linear- oder Drehgeber (1, 1') nach einem der vorhergehenden Ansprüche, **dadurch gekennzeichnet, dass** die von Rückschluss- und Umlenkkörper (18, 18') gebildete Einheit aus weichgeglühtem MU-Metall besteht.

7. Linear- oder Drehgeber (1, 1') nach einem der vorhergehenden Ansprüche, **dadurch gekennzeichnet, dass** zumindest die Feinauflösungs-Sensoreinheit (29; 29'), der Rückschluss- und der Umlenkkörper (18, 18') durch einen feststehenden ferromagnetischen Schirm (38; 38') gegen externe Magnetfelder und mechanische Stöße geschützt sind.

8. Linear- oder Drehgeber (1, 1') nach einem der vorhergehenden Ansprüche, **dadurch gekennzeichnet, dass** die primären Permanentmagnete (16, 17; 43, 44, 45, 46) der Erregereinheit (8, 8') getemperte Hartmagnete sind.

9. Linear- oder Drehgeber (1, 1') nach einem der vorhergehenden Ansprüche, **dadurch gekennzeichnet, dass** der Rückschlusskörper (18') die Form einer Rinne mit U-förmigem Querschnitt besitzt, die sich in Richtung der zu überwachenden Bewegung erstreckt.

10. Linear- oder Drehgeber (1, 1') nach einem der vorhergehenden Ansprüche, **dadurch gekennzeichnet, dass** vier Magnetfeldsensoren (28, 25, 26, 27), vorgesehen welche die Signale a, b, c, d erzeugen und die paarweise so verschaltet sind, dass die Signaldifferenzen a-d und c-b entstehen, wobei die jeweilige Verbindungslinie zwischen den Magnetfeldsensoren (25, 26, 27, 28), eines jeden Magnetfeldsensorpaars (28, 27 und 26, 25) senkrecht zur Bewegungsrichtung (R; L) ausgerichtet ist.

11. Lineargeber nach Anspruch 9, **dadurch gekennzeichnet, dass** sich die Rinne mit U-förmigem Querschnitt geradlinig erstreckt.

12. Drehgeber (1, 1') nach Anspruch 10, mit einer Geberwelle (3'), **dadurch gekennzeichnet, dass** die Rinne kreisringförmig ausgebildet ist und die Geberwelle (3') konzentrisch umschließt.

13. Drehgeber (1, 1') nach einem der Ansprüche 1 bis 8, mit einer Geberwelle (3'), **dadurch gekennzeichnet, dass** der Rückschlusskörper (18, 18') gemeinsam mit dem Umlenkkörper einen zylindrischen Topf bildet, dessen Achse sich parallel zur Achse der Gerberwelle (3) erstreckt.

14. Linear- oder Drehgeber (1, 1') nach einem der vorhergehenden Ansprüche, **dadurch gekennzeichnet, dass** alle mit dem von den primären Permanentmagneten (16, 17; 43, 44, 45, 46) erzeugten Messfeld in Berührung kommenden elektronischen Komponenten des Linear- oder Drehgebers (1; 1') keine ferromagnetischen Bestandteile enthalten.

15. Linear- oder Drehgeber (1, 1') nach einem der vorhergehenden Ansprüche, **dadurch gekennzeichnet, dass** er eine Zähleinheit (30) zum Zählen der durchlaufenen Messintervalle umfasst.

## Claims

1. Magnetic linear or rotary encoder (1, 1') for monitoring the movement range of a movable body, wherein the magnetic linear or rotary encoder (1, 1') has the following:

   - an exciter unit (8, 8'), which maps the movement to be monitored, and which has at least two primary permanent magnets (16, 17; 43, 44, 45, 46), which are arranged diametrically opposing relative to each other, which are each arranged with one of their poles at a ferromagnetic back iron body (9, 9') and are magnetically connected to each other via the same, and which form between their free, inwardly directed, unlike poles a measurement field space that connects them;
   - a fine resolution sensor unit (29), which is arranged fixedly and is for determining a fine position value; and
   - a processing electronics, which has a data storage and evaluates the signals of the fine resolution sensor unit (29);
   **characterized in that**
   - a ferromagnetic deflecting body (18, 18') is provided, which moves together with the exciter unit (8, 8'), which deflects at least a part of the magnetic field lines of the magnetic field generated by the primary permanent magnets (16, 17; 43, 44, 45, 46) in a direction that is perpendicular to the magnetization vector of the primary permanent magnets (16, 17; 43, 44, 45, 46),
   - the fine resolution sensor unit (29) has more than two magnetic field sensors (25, 26, 27, 28), which are arranged such that they are penetrated by the magnetic field lines that are deflected by the deflecting body (18, 18') with a perpendicular component,
   - at least the back iron body (9, 9') consists of a thermally treated, ferromagnetic material, and
   - the fine resolution sensor unit (29) contains no ferromagnetic component parts.

2. Linear or rotary encoder (1, 1') according to claim 1, **characterized in that** also the deflecting body (18, 18') consists of a thermally treated, ferromagnetic material.

3. Linear or rotary encoder (1, 1') according to any one of the claims 1 or 2, **characterized in that** the fine resolution sensor unit (29) is formed as an integrated circuit (24) having at least three Hall effect magnetometers.

4. Linear or rotary encoder (1, 1') according to any one of the preceding claims, wherein the movement range to be monitored is subdivided in two or more measurement segments, and which has a counting sensor unit (30) for counting the traversed measurement segments, **characterized in that** the counting sensor unit (30) is arranged fixedly such that it can be penetrated by the central field of further permanent magnets (34, 35; 48, 49, 50, 51) and is responsive thereto.

5. Linear or rotary encoder (1, 1') according to any one of the claims 2 to 4, **characterized in that** the back iron body and the deflecting body (18, 18') are combined into one unit.

6. Linear or rotary encoder (1, 1') according to any one of the preceding claims, **characterized in that** the unit, which is formed by the back iron body and the deflecting body (18, 18'), consists of soft-annealed MU metal.

7. Linear or rotary encoder (1, 1') according to any one of the preceding claims, **characterized in that** at least the fine resolution sensor unit (29; 29'), the back iron body, and the deflecting body (18, 18') are protected against external magnetic fields and mechanical shocks by a fixedly arranged, ferromagnetic shield (38, 38').

8. Linear or rotary encoder (1, 1') according to any one of the preceding claims, **characterized in that** the primary permanent magnets (16, 17; 43, 44, 45, 46) of the exciter unit (8, 8') are tempered hard magnets.

9. Linear or rotary encoder (1, 1') according to any one of the preceding claims, **characterized in that** the back iron body (18') has the shape of a groove, which has a U-shaped cross section and extends in the direction of the movement to be monitored.

10. Linear or rotary encoder (1, 1') according to any one of the preceding claims, **characterized in that** four magnetic field sensors (28, 25, 26, 27) are provided, which generate the signals a, b, c, d, and which are wired up pairwisely such that the signal differences a-d and c-b are created, wherein the respective connection line, between the magnetic field sensors (28, 25, 26, 27), of each pair of magnetic field sensors (28, 27, and 26, 25) are aligned perpendicular to the movement direction (R; L).

11. Linear encoder according to claim 9, **characterized in that** the groove, which has a U-shaped cross section, extends rectilinearly.

12. Rotary encoder (1, 1') according to claim 10, having an encoder shaft (3'), **characterized in that** the groove is formed circularly and surrounds the encoder shaft (3') concentrically.

13. Rotary encoder (1, 1') according to any one of the claims 1 to 8, having an encoder shaft (3'), **characterized in that** the back iron body (18, 18') together with the deflecting body (18, 18') forms a cylindrical pot, the axis of which extends parallel to the axis of the encoder shaft (3').

14. Linear or rotary encoder (1, 1') according to any one of the preceding claims, **characterized in that** all electronic components of the linear or rotary encoder (1, 1'), which come in contact with the measurement field that is generated by the primary permanent magnets (16, 17; 43, 44, 45, 46), contain no ferromagnetic component parts.

15. Linear or rotary encoder (1, 1') according to any one of the preceding claims, **characterized in that** it has a counter unit (30) for counting the traversed measurement intervals,

**Revendications**

1. Codeur linéaire ou rotatif magnétique (1, 1') pour la surveillance de la zone de déplacement d'un corps mobile, dans lequel le codeur linéaire ou rotatif (1, 1') comprend ce qui suit,

- une unité d'excitation (8, 8') représentant le mouvement à surveiller avec au moins deux aimants permanents primaires agencés de manière diamétralement opposée l'un à l'autre (16, 17 ; 43, 44, 45, 46), qui sont agencés avec respectivement un de leurs pôles au niveau d'un corps de dérivation ferromagnétique (9, 9') et sont reliés magnétiquement l'un à l'autre par le biais de celui-ci et les pôles opposés, dirigés vers l'intérieur, libres forment un espace de champ de mesure les reliant,
- une unité de détection haute résolution (29) agencée de manière fixe, servant à la détermination d'une valeur de position fine, et

- une électronique de traitement avec mémoire de données évaluant les signaux de l'unité de détection haute résolution (29),

**caractérisé en ce**

- **qu'**un corps de déviation (18, 18') ferromagnétique se déplaçant avec l'unité d'excitation (8, 8') est prévu, qui dévie au moins une partie des lignes de champ magnétique du champ magnétique généré par les aimants permanents primaires (16, 17 ; 43, 44, 45, 46) dans une direction perpendiculaire au vecteur de magnétisation des aimants permanents primaires (16, 17 ; 43, 44, 45, 46),

- **que** l'unité de détection haute résolution (29) comprend plus de deux capteurs de champ magnétique (25, 26, 27, 28), qui sont agencés de sorte qu'ils soient traversés par les lignes de champ magnétique déviées par les corps de déviation (18, 18') avec une composante perpendiculaire,

- **qu'**au moins le corps de dérivation (9, 9') est en un matériau ferromagnétique traité thermiquement et

- **que** l'unité de détection haute résolution (29) ne contient pas de composants ferromagnétiques.

2. Codeur linéaire ou rotatif (1, 1') selon la revendication 1, **caractérisé en ce que** le corps de déviation (18, 18') est également en un matériau ferromagnétique traité thermiquement.

3. Codeur linéaire ou rotatif (1, 1') selon l'une quelconque des revendications 1 ou 2, **caractérisé en ce que** l'unité de détection haute résolution (29) est réalisée en tant que IC (24) avec au moins trois sondes de Hall.

4. Codeur linéaire ou rotatif (1, 1') selon l'une quelconque des revendications précédentes, dans lequel la zone de mouvement à surveiller est divisée en deux segments de mesure ou plus et comprend une unité de détection de comptage (30) pour le comptage des segments de mesure parcourus, **caractérisé en ce que** l'unité de détection de comptage (30) est agencée de manière fixe de sorte qu'elle puisse être traversée par le champ central d'autres aimants permanents (34, 35 ; 48, 49, 50, 51) et y réponde.

5. Codeur linéaire ou rotatif (1, 1') selon l'une quelconque des revendications 2 à 4, **caractérisé en ce que** les corps de dérivation et de déviation (18, 18') sont regroupés en une unité.

6. Codeur linéaire ou rotatif (1, 1') selon l'une quelconque des revendications précédentes, **caractérisé en ce que** l'unité formée par les corps de dérivation et de déviation (18, 18') est en un métal MU recuit.

7. Codeur linéaire ou rotatif (1, 1') selon l'une quelconque des revendications précédentes, **caractérisé en ce qu'**au moins l'unité de détection haute résolution (29 ; 29'), le corps de dérivation et le corps de déviation (18, 18') sont protégés par un blindage ferromagnétique fixe (38 ; 38') contre des champs magnétiques et coups mécaniques externes.

8. Codeur linéaire ou rotatif (1, 1') selon l'une quelconque des revendications précédentes, **caractérisé en ce que** les aimants permanents primaires (16, 17 ; 43, 44, 45, 46) de l'unité d'excitation (8, 8') sont des aimants durs trempés.

9. Codeur linéaire ou rotatif (1, 1') selon l'une quelconque des revendications précédentes, **caractérisé en ce que** le corps de dérivation (18') possède la forme d'un canal avec section transversale en forme de U, qui s'étend en direction du mouvement à surveiller.

10. Codeur linéaire ou rotatif (1, 1') selon l'une quelconque des revendications précédentes, **caractérisé en ce que** quatre capteurs de champ magnétique (28, 25, 26, 27) sont prévus, lesquels génèrent les signaux a, b, c, d et qui sont interconnectés par paire de sorte que les différences de signaux a-d et c-b soient générées, dans lequel la ligne de liaison respective entre les capteurs de champ magnétique (25, 26, 27, 28) de chaque paire de capteurs de champ magnétique (28, 27 et 26, 25) est orientée perpendiculairement à la direction de mouvement (R ; L).

11. Codeur linéaire selon la revendication 9, **caractérisé en ce que** le canal s'étend de manière rectiligne avec une section transversale en forme de U.

12. Codeur rotatif (1, 1') selon la revendication 10, avec un arbre de codeur (3'), **caractérisé en ce que** le canal est réalisé en forme d'anneau circulaire et entoure concentriquement l'arbre de codeur (3').

13. Codeur rotatif (1, 1') selon l'une quelconque des revendications 1 à 8 avec un arbre de codeur (3'), **caractérisé en ce que** le corps de dérivation (18, 18') forme conjointement avec le corps de déviation un pot cylindrique, dont l'axe s'étend parallèlement à l'axe de l'arbre de codeur (3).

14. Codeur linéaire ou rotatif (1, 1') selon l'une quelconque des revendications précédentes, **caractérisé en ce que** tous les composants électroniques du codeur linéaire ou rotatif (1 ; 1') entrant en contact avec le champ de mesure généré par les aimants permanents primaires (16, 17 ; 43, 44, 45, 46) ne contiennent pas de composants ferromagnétiques.

15. Codeur linéaire ou rotatif (1, 1') selon l'une quelconque des revendications précédentes, **caractérisé en ce qu'**il comprend une unité de comptage (30) pour le comptage des intervalles de mesure parcourus.

*Fig. 1*

*Fig. 2*

*Fig. 3*

*Fig. 4*

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007039050 A1
- DE 102010022154 A1
- DE 102009023515 A1
- DE 102010010560

- DE 4224225 A1
- DE 102012002204
- DE 102009034744 A1